# EUROPÄISCHE PATENTSCHRIFT

(11) **EP 0 601 455 B1**
(45) Veröffentlichungstag und Bekanntmachung des Hinweises auf die Patenterteilung: **11.09.1996**
(21) Anmeldenummer: 93119350.2
(22) Anmeldetag: 01.12.1993
(51) Int. Cl.: C08L 23/10

(54) **Polypropylen-Formmasse zur Herstellung von Kalanderfolien**
Polypropylene composition for the manufacture of calendred sheets
Composition à base de polypropylène pour la fabrication de feuilles calendrées

(30) Priorität: 02.12.1992 DE 4240409
(43) Veröffentlichungstag der Anmeldung: 15.06.1994
(73) Patentinhaber: HOECHST AKTIENGESELLSCHAFT, 65929 Frankfurt am Main (DE)
(72) Erfinder: Piesold, Jan-Peter, Dr., D-86153 Augsburg (DE)

(56) Entgegenhaltungen:
- EP-A- 0 431 733

## Beschreibung

Die vorliegende Erfindung bezieht sich auf eine Formmasse zur Herstellung von Polypropylenfolien durch Kalandrierung, die aus einem Homo- oder Copolymerisat des Propylens und einem thermoplastischen Fluorpolymeren mit einem Fluorgehalt von mindestens 50 % und einem Schmelzpunkt unterhalb der üblichen Verarbeitungstemperatur des Polypropylens besteht.

Die Herstellung von Folien aus Polypropylen erfolgt ganz überwiegend durch Extrusionsverfahren, wie beispielsweise durch Folienblasen oder durch Extrusion über eine Breitschlitzdüse mit nachfolgender Kühlung auf Metallwalzen (Chill-roll-Verfahren). Demgegenüber hat das aus der PVC-Folienherstellung zur Herstellung besonders hochwertiger Folien gebräuchliche Kalanderverfahren nur eine untergeordnete Bedeutung. Zwar ist die Herstellung von Kalanderfolien aus Polypropylen schon vor über 30 Jahren erstmalig beschrieben worden, aufgrund von ungelösten technischen Problemen hat das Verfahren jedoch kaum Verbreitung gefunden.

Polypropylenformmassen neigen bei den bei der Kalanderverarbeitung üblichen Temperaturen sehr stark zum Kleben. Dies macht es notwendig, relativ große Mengen an Trennmitteln zuzusetzen, die zu unerwüschten Nebeneffekten, wie beispielsweise zu Walzenbelägen und dadurch schlechten Oberflächenqualitäten der Folien oder zur Beeinträchtigung ihrer Transparenz oder Verschweißbarkeit führen.

Die geringe Schmelzenfestigkeit des Polypropylen im Vergleich zum PVC limitiert die zur Kalanderverarbeitung in Frage kommenden Polypropylentypen auf solche mit einer hohen Schmelzviskosität. Diese PP-Typen zeigen jedoch eine hohe Kristallisationsneigung, die zu störenden, qualitätsmindernden Oberflächenstrukturen führen.

Es ist bekannt, daß geignete Polypropylentypen zur Herstellung von Kalanderfolien einen MFI 230/2,16 von 0,4 bis 2,0 g/10 min besitzen müssen und so zu stabilisieren sind, daß ihr Schmelzindex während der Verarbeitung nicht über 2,4 g/10 min ansteigt (vgl. EP 40 298).

Weiterhin ist ein Verfahren zur Herstellung von PP-Kalanderfolien bekannt, bei welchem das Polypropylen einen MFI 230/2,16 von 0,2 bis 1,0 g/10 min aufweist und zusätzliche Trennmittel wie Siloxane, Polyoctamere und Metallsalze von Carbonsäuren zugesetzt werden (vgl. DE 32 40 338).

Auch ist eine Polyolefinformmasse zur Herstellung von Kalanderfolien bekannt, bei welcher geeignete Polypropylentypen beispielsweise einen MFI 230/2,16 von 0,5g/10 min haben (vgl. DE 40 28 407). Die genannten Formmassen enthalten ein Stabilisatorsystem aus Phosphiten oder Schwefelverbindungen in Verbindung mit einem phenolischen Antioxidans, welches die Aufgabe hat, einen Anstieg des MFI-Werts im Verlauf der Verarbeitung und damit eine stärkere Klebeneigung des Polyolefins zu unterdrücken.

Nach dem bisherigen Stand der Technik sind zur Herstellung von Kalanderfolien aus Polypropylen demnach PP-Typen mit einer hohen Schmelzviskosität, das heißt mit einem MFI 230/2,16 von kleiner 5 g/10 min, erforderlich, wobei vorteilhaft zusätzliche Stabilisatoren sowie Gleit- und Trennmittel eingesetzt werden.

Es ist bekannt, daß das Verarbeitungsverhalten von Polyolefinen durch den Zusatz von Fluorpolymeren, die aus Tetrafluorethylen, Vinylidenfluorid, Hexafluorpropen, Vinylfluorid und Chlortrifluorethylen erhältlich sind, verbessert wird (vgl. US 31 25 547). Der Zusatz dieser Fluorpolymere erhöht in speziellen Polyolefinen, vorzugsweise in LLDPE (Linear Low Density Polyethylene) die Fließfähigkeit der Polymerschmelze. Zudem verbessern sie bei Verarbeitungsverfahren, bei denen die Polymerschmelze einer hohen Scherung unterliegt, wie beispielsweise beim Folienblasen durch enge Ringdüsen, die Oberflächengüte des Extrudats, indem das Auftreten von Schmelzbruch (shark-skin) verhindert wird.

Schließlich ist der Zusatz von geringen Mengen Vinylidenfluorid zu PP-Formmassen bekanntgeworden (vgl. JP 61/085 457). Diese sollen Extrusionsfolien mit verbesserten Slipeigenschaften ergeben.

Es wurde nun gefunden, daß spezielle fluorhaltige Polymere in sehr geringen Mengen die Klebeneigung von PP-Formmassen derart vermindern, daß auch Polypropylen mit deutlich höherem MFI-Wert vorteilhaft auf Kalandern zu Folien verarbeitet werden kann und der Zusatz weiterer Gleit- und Trennmittel in der Regel überflüssig wird.

Die Erfindung betrifft somit eine Polypropylen-Formmasse zur Herstellung von Kalanderfolien enthaltend
99,5 bis 99,99 Gew.-% eines Homo- oder Copolymerisats des Propylens mit einem MFI 230/2,16 von 2,0 bis 25 g/10 min und
0,01 bis 0,5 Gew.-% eines fluorhaltigen thermoplastischen Polymeren mit einem Fluorgehalt von mindestens 50 % und einem Schmelzpunkt unterhalb von 250°C.

Die erfindungsgemäße Polypropylen-Formmasse besteht zu 99,5 bis 99,99 Gew.-% eines Homo- oder Copolymerisats des Propylens mit einem MFI 230/2,16 von 2,0 bis 25 g/10 min, vorzugsweise 4 bis 15 g/10 min. Zu den Copolymerisaten des Propylens gehören beispielsweise Ethylen-Propylen-Copolymere, Propylen-Buten-1-Copolymere, Propylen-lsobutylen-Copolymere. Möglich sind auch Mischungen von Homo- oder Copolymerisaten des Propylens mit Terpolymeren von Propylen, Ethylen und einem Dien.

Weiterhin besteht die erfindungsgemäße Formmasse zu 0,01 bis 0,5, vorzugsweise 0,02 bis 0,04 Gew.-% aus einem fluorhaltigem thermoplastischen Polymeren mit einem Fluorgehalt von mindestens 50 %, vorzugsweise mehr als 70 %, und einem Schmelzpunkt unterhalb der üblichen Verarbeitungstemperatur des Polypropylens, das heißt unterhalb von 250°C, vorzugsweise unterhalb von 190°C, insbesondere von 100 bis 130°C.

Geeignete fluorhaltige Polymere werden durch Copolymerisation von Vinylidenfluorid und Hexafluorpropylen oder durch Terpolymerisation von Vinylidenfluorid, Hexafluorpropylen und Tetrafluorethylen hergestellt. Derartige Fluorpolymere haben vorzugsweise einen Fluorgehalt von über 50 %, insbesondere von mehr als 68 % und einen Schmelzpunkt unterhalb der üblichen Verarbeitungstemperatur des Polypropylens, das heißt kleiner als 230°C. Besonders bevorzugt ist ein Fluorpolymer aus Tetrafluorethylen, Vinylidenfluorid und Hexafluorpropylen mit einem Fluorgehalt von 68 bis 76 Gew.-% und einem Schmelzpunkt von unter 185°C, besonders bevorzugt von 100 bis 130°C.

Zusätzlich kann die erfindungsgemäße Formmasse noch weitere Additive enthalten, wie beispielsweise Antioxidantien, beispielsweise alkylierte Monophenole, alkylierte Hydrochinone, hydroxylierte Thiodiphenylether, Alkyliden-Bisphenole, Benzylverbindungen, Acylaminophenole, Ester der β-(5-t-butyl-4-hydroxy-3-methylphenyl)-propionsäure, Amide der β-(3,5-Di-t-butyl-4-hydroxyphenyl)-propionsäure, UV-Absorber und Lichtschutzmittel, beispielsweise 2-(2'-Hydroxyphenyl)-benztriazole, 2-Hydroxybenzophenone, Oxalsäurediamide, Ester von gegebenenfalls substituierten Benzoesäuren, Acrylate, Nickelverbindungen, sterisch gehinderte Amine (HALS), Metalldesaktivatoren, Phosphate und Phosphonite, peroxidzerstörende Verbindungen, basische Costabilisatoren, Nukleierungsmittel, Füllstoffe und Verstärkungsstoffe, Weichmacher, optische Aufheller, Flammschutzmittel, Antistatika, Treibmittel, Gleitmittel und Pigmente.

Für die Zudosierung des fluorhaltigen Polymeren kommen alle Verfahren in Betracht, welche auch sonst bei der Zugabe von Additiven üblich sind. Es ist beispielsweise möglich, das Fluorpolymer dem Polypropylen bei der Herstellung, Konfektionierung oder Verarbeitung kontinuierlich zuzufügen. Besonders vorteilhaft ist es, Verfahren zu wählen, welche eine besonders gleichmäßige Verteilung des Fluorpolymeren ermöglichen, hier ist beispielsweise die Einarbeitung mit Knetern, Banburymischern oder Mischextrudern zu nennen. Vorteilhaft ist die Herstellung einer höher konzentrierten Mischung aus Fluorpolymer und Polypropylen, welche beispielsweise 0,1 bis 20 Gew.-% Fluorpolymer, im besonderen 1 bis 3 Gew.-% Fluorpolymer enthält und nach der Herstellung als Pulver, Tropf- oder Stranggranulat vorliegt. Dieses Masterbatch kann dann im Verlauf der Folienherstellung, beispielsweise im Plastizierertruder, dem Polypropylen zudosiert werden und ergibt auch auf Maschinen ohne spezielle Mischelemente eine sehr homogene Verteilung des Wirkstoffs.

Mit der erfindungsgemäßen Formmasse ist es möglich, Folien aus Polypropylen im Kalandrierverfahren in hoher Qualität zu erzeugen. Der Zusatz von Fluorpolymeren ist nicht nur wirksamer hinsichtlich der Trennwirkung, sondern ergibt auch deutlich weniger Beläge und bewirkt ein verbessertes Abzugsverhalten im Vergleich zur Anwendung herkömmlicher Gleitmittel.

Die folgenden Beispiele sollen die Erfindung näher erläutern.

Verwendet wurde ein Laborkalander der Firma Schwabenthan mit 4 Walzen in L-Anordnung, einer Walzenbreite von 35 cm und einem Walzendurchmesser von 15 cm. Die Walzen sind elektrisch beheizt. Folgende Einstellungen wurden bei allen Versuchen vorgenommen:

| Walze | Temperatur (°C) | Drehzahl (1/min) |
|---|---|---|
| Heizwalze 1 | 150 | 10 |
| Heizwalze 2 | 170 | 12 |
| Heizwalze 3 | 170 | 15 |
| Heizwalze 4 | 120 | 18 |
| Kühlwalze 1 | 15 | 18 |
| Kühlwalze 2 | 15 | 18 |

Die Plastizierung des Polypropylens erfolgte über einen Doppelschneckenextruder. Die Temperatur wurde in Abhängigkeit vom eingesetzten PP-Typ so gewählt, daß die Massetemperatur am Düsenaustritt jeweils 200°C betrug.

Weiterhin wurde ein Doppelwalzwerk mit einer Walzenbreite von 30 cm und einem Walzendurchmesser von 15 cm eingesetzt. Drehzahl 15/20 Upm, Temperatur 190°C.

| Beispiel/Vgl.beispiel | Mengen in g | | | | | | | |
|---|---|---|---|---|---|---|---|---|
| | A | 1 | B | C | D | 2 | E | F |
| PP 1 | 200 | 200 | 200 | 200 | | | | |
| PP2 | | | | | 200 | 200 | 200 | 200 |
| AO 1 | 0,1 | 0,1 | 0,1 | 0,1 | 0,1 | 0,1 | 0,1 | 0,1 |
| AO 2 | 0,1 | 0,1 | 0,1 | 0,1 | 0,1 | 0,1 | 0,1 | 0,1 |
| Fluorpolymer | | 0,1 | | | | 0,1 | | |
| Ca-Stearat | | | 0,2 | | | | 0,2 | |
| Montanwachs | | | | 0,1 | | | | 0,1 |
| PP 1 PP-Homopolymer (MFI 230/2,16 5 g/10 min) PP 2 PP-Homopolymer (MFI 230/2,16 12 g/10min) AO 1 Bis-[3,3-bis-4-(4'-hydroxy-3'-t-butylphenyl)-butansäure]-ethylenglykolester AO 2 Tri(2,4-di-t-butylphenyl)phosphit Fluorpolymer Terpolymer aus 40% Tetrafluoretylen, 40% Vinylidenfluorid und 20% Hexafluorpropen Montanwachs Teilverseiftes Esterwachs aus Montansäuren mit 1,3-Butandiol | | | | | | | | |

### Ergebnisse:

1.) Walzversuche (Doppelwalzwerk)

| Beispiel/Vgl. | Klebfreie Zeit (min) | Abziehbarkeit des Walzfells |
|---|---|---|
| A | 13 | schlecht |
| 1 | 24 | gut |
| B | 5 | schlecht |
| C | 22 | mäßig |
| D | 6 | schlecht |
| 2 | 12 | gut |
| E | <1 | sehr schlecht |
| F | 11 | mäßig |

2. Kalanderversuche

| Beispiel/Vgl. | Abziehbarkeit der Folie | Walzenbeläge | Abzugsverhalten |
|---|---|---|---|
| A | mäßig | keine | unruhige Abzugslinie |
| 1 | gut | keine | glatte, gerade Abzugslinie |
| B | mäßig | leichter Belag | unruhige Abzugslinie |
| C | gut | leichter Belag | etwas unruhige Abzugslinie |
| D | klebt sofort | | |
| 2 | mäßig - gut | keine | leicht gebogene Abzugslinie |
| E | klebt sofort | | |
| F | klebt sofort | | |

## Patentansprüche

1. Polypropylen-Formmasse zur Herstellung von Kalanderfolien enthaltend
99,5 bis 99,99 Gew.-% eines Homo- oder Copolymerisats des Propylens mit einem MFI 230/2,16 von 2,0 bis 25 g/10 min und
0,01 bis 0,5 Gew.-% eines fluorhaltigen thermoplastischen Polymeren mit einem Fluorgehalt von mindestens 50 % und einem Schmelzpunkt unterhalb von 250°C.

2. Polypropylen-Formmasse nach Anspruch 1, dadurch gekennzeichnet, daß das fluorhaltige thermoplastische Polymere einen Fluorgehalt von mehr als 70 % und einen Schmelzpunkt von 100 bis 130°C besitzt.

3. Formmasse nach Anspruch 1, dadurch gekennzeichnet, daß sie zusätzlich Antioxidantien, Lichtschutzmittel, Metalldesaktivatoren, Phosphate und Phosphonite, peroxidzerstörende Verbindungen, basische Costabilisatoren, Nukleierungsmittel, Füllstoffe und Verstärkungsstoffe, Weichmacher, optische Aufheller, Flammschutzmittel, Antistatika, Treibmittel, Gleitmittel oder Pigmente enthält.

4. Verfahren zur Herstellung von Kalanderfolien durch Plastizieren einer Polypropylen-Formmasse und Ausziehen im plastischem Zustand auf einem Folienkalander, dadurch gekennzeichnet, daß man eine Formmasse verwendet, die
99,5 bis 99,99 Gew.-% eines Homo- oder Copolymerisats des Propylens mit einem MFI 230/2,16 von 2,0 bis 25 g/10 min und
0,01 bis 0,5 Gew.-% eines fluorhaltigen thermoplastischen Polymeren mit einem Fluorgehalt von mindestens 50 % und einem Schmelzpunkt unterhalb von 250°C enthält.

## Claims

1. A polypropylene molding compound for producing calendered films, which comprises 99.5 to 99.99% by weight of a homopolymer or copolymer of propylene with an MFI 230/2.16 of 2.0 to 25 g/10 min and
0.01 to 0.5% by weight of a fluorine-containing thermoplastic polymer with a fluorine content of at least 50% and a melting point of below 250°C.

2. The polypropylene molding compound as claimed in claim 1, wherein the fluorine-containing thermoplastic polymer has a fluorine content of more than 70% and a melting point from 100 to 130°C.

3. The molding compound as claimed in claim 1, which additionally comprises antioxidants, light stabilizers, metal deactivators, phosphates and phosphonites, peroxide-scavenging compounds, basic costabilizers, nucleating agents, fillers and reinforcing agents, plasticizers, optical brighteners, flameproofing agents, antistatic agents, blowing agents, lubricants or pigments.

4. A process for producing calendered films by plasticating a polypropylene molding compound and drawing it out in the plastic state on a film calender, which comprises using a molding compound which comprises 99.5 to 99.99% by weight of a homopolymer or copolymer of propylene with an MFI 230/2.16 of 2.0 to 25 g/10 min and
0.01 to 0.5% by weight of a fluorine-containing thermoplastic polymer with a fluorine content of at least 50% and a melting point of below 250°C.

## Revendications

1. Composition à mouler de polypropylène pour la fabrication de feuilles calandrées contenant
99,5 à 99,99 % en masse d'un homopolymère ou d'un copolymère de propylène ayant un indice de fluidité à l'état fondu MFI 230/16 de 2,0 à 25 g/10 min et
0,01 à 0,5 % en masse d'un polymère thermoplastique fluoré ayant une teneur en fluor d'au moins 50 % et un point de fusion inférieur à 250°C.

2. Composition à mouler de polypropylène selon la revendication 1, caractérisée en ce que le polymère thermoplastique fluoré a une teneur en fluor de plus de 70 % et un point de fusion compris entre 100 et 130°C.

3. Composition à mouler selon la revendication 1, caractérisée en ce qu'elle contient en outre des antioxydants, des agents de protection contre la lumière, des agents désactivateurs de métaux, des phosphates et des phosphonites, des composés détruisant les peroxydes, des costabilisants basiques, des agents de nucléation, des charges et des agents renforçants, des plastifiants, des azurants optiques, des agents ignifuges, des antistatiques, des agents soufflants, des lubrifiants ou des pigments.

4. Procédé de fabrication de feuilles calandrées par plastification d'une composition à mouler de polypropylène et étirement à l'état plastique sur une calandre pour feuilles, caractérisé en ce que l'on utilise une composition à mouler contenant
99,5 à 99,99 % en masse d'un homopolymère ou d'un copolymère de propylène ayant un indice de fluidité à l'état fondu MFI 230/16 de 2,0 à 25 g/10 min et
0,01 à 0,5 % en masse d'un polymère thermoplastique fluoré ayant une teneur en fluor d'au moins 50 % et un point de fusion inférieur à 250°C.
